(19) Europäisches Patentamt
European Patent Office
Office européen des brevets

(11) **EP 4 198 866 A1**

(12) **DEMANDE DE BREVET EUROPEEN**

(43) Date de publication:
**21.06.2023 Bulletin 2023/25**

(21) Numéro de dépôt: **21306852.1**

(22) Date de dépôt: **20.12.2021**

(51) Classification Internationale des Brevets (IPC):
**G06Q 50/06** (2012.01)

(52) Classification Coopérative des Brevets (CPC):
**G06Q 50/06**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(71) Demandeur: **Bull SAS**
**78340 Les Clayes-sous-Bois (FR)**

(72) Inventeurs:
• **SEROUL, Pierre**
**38650 SINARD (FR)**
• **BOUZON, Lionel**
**38830 Crêts-en-Belledonne (FR)**
• **JOUFFRAY, Titouan**
**38000 GRENOBLE (FR)**

(74) Mandataire: **Argyma**
**14 Boulevard de Strasbourg**
**31000 Toulouse (FR)**

(54) **DISPOSITIF DE DÉTERMINATION EN TEMPS RÉEL DE L'EMPREINTE CARBONE D'UNE INFRASTRUCTURE INFORMATIQUE**

(57) Dispositif (20) de détermination en temps réel de l'empreinte carbone d'une infrastructure informatique, comprenant notamment un module de collecte (230) configuré pour collecter des données dites « d'équipement » comprenant, pour chaque équipement informatique (110), la mesure de sa consommation énergétique et sa localisation horodatée, un module de réception (240) configuré pour recevoir, pour chaque site, une valeur d'intensité carbone fournie par le fournisseur d'électricité (130) du site, un module de consolidation (260) configuré pour associer une valeur d'intensité carbone d'un site à chaque équipement informatique (110) en fonction de la localisation horodatée dudit équipement informatique (110), pour calculer l'empreinte carbone de chaque équipement informatique (110) à partir de la valeur d'intensité carbone associée et de sa consommation énergétique mesurée.

FIGURE 2

EP 4 198 866 A1

**Description**

**[Domaine technique]**

La présente invention se rapporte au domaine des empreintes carbone des infrastructures informatiques et concerne plus particulièrement un dispositif de détermination en temps réel de l'empreinte carbone d'une infrastructure informatique et un système comprenant une infrastructure informatique et un tel dispositif.

**[Etat de la technique antérieure]**

En France, la loi de transition énergétique pour la croissance verte impose aux entreprises d'inclure l'empreinte carbone de leur activité dans leur rapport de gestion annuel. L'établissement de cette empreinte s'appuie sur des méthodes d'estimation, et non de mesure. Dans le cadre des systèmes informatiques, cette estimation est trop généraliste car elle ne permet pas de prendre en compte les solutions mises en œuvre pour réduire l'impact carbone d'une infrastructure informatique.

A titre d'exemple, changer les paramètres d'alimentation d'une flotte d'ordinateurs portables, optimiser les flux réseaux dans un supercalculateur, utiliser des algorithmes d'intelligence artificiel frugaux sont autant de leviers qui ne sont pas pris en compte lors de l'établissement de l'empreinte carbone d'une entreprise. Pour les entreprises de services du numériques (ESN), ces différences sont non négligeables.

Il existe sur le marché de nombreuses solutions permettant le monitoring d'un système informatique (par exemple Telegraf®, MetricBeat® ou collectd®). Ces agents de transfert récupèrent les métriques des systèmes d'information et ce, quel que soit le système d'exploitation (Linux®, Windows®, Mac OS®, Android®, IOS®) et les envoient sur des bases de données centralisées. En revanche, les informations recueillies sur la puissance électrique consommée dépendent des paramétrages du système. A titre d'exemple, Telegraf® permet la récupération des consommations électriques sous Linux® via l'outil Powerstat® mais il n'y a pas d'équivalence pour Windows®. De plus, les systèmes indiqués ne fonctionnent pas sur Android® ou IOS®.

D'autres systèmes comme PowerAPI® combiné, ou non, à SmartWatts® sont dédiés à la consommation énergétique des systèmes informatiques. En revanche, ces derniers ne s'intéressent qu'à la mesure de l'unité de traitement centrale (Central Processing Unit ou CPU) et de la mémoire vive (Random Access Memory ou RAM) via l'utilisation des registres « RAPL » (Running Average Power Limit) mais ne prennent pas en compte la consommation des unités de traitement graphiques (Graphical Processing Unit ou GPU) et des unités de traitement de tenseur (Tensor Processing Unit ou TPU), qui est non négligeable dans un certain nombre d'applications comme l'intelligence artificielle.

Enfin, l'ensemble de ces outils ne permettent pas de mesurer une empreinte carbone qui dépend non seulement de la quantité d'électricité consommée mais également de son intensité carbone qui varie au cours du temps et de la localisation.

Il existe quelques outils spécifiques pour mesurer l'empreinte carbone de telle ou telle solution informatique. Le plus connu est CodeCarbon®. Ce dernier permet notamment de monitorer la consommation énergétique du CPU via l'utilisation des RAPL et celle du GPU via une librairie appelée « NVIDIA Management Library ». Via un système de localisation, l'outil est capable de déterminer dans quel pays ou sur quelle solution cloud est hébergée le système informatique. Enfin, l'outil récupère l'intensité carbone du pays afin de déterminer l'empreinte carbone de l'équipement informatique étudié.

Bien que cette solution soit plus exhaustive que les agents de monitoring classiques, elle souffre de quelques limites. Tout d'abord, il ne s'agit pas d'une application ou d'un service en tant que tel, elle doit être intégrée dans le code de l'application dont on cherche à évaluer l'empreinte. Elle n'est donc pas adaptée pour fonctionner en permanence sur les infrastructures informatiques. Ensuite, elle n'est pas supportée par les systèmes Android® et IOS®. En outre, les données de localisation servant au calcul de l'empreinte carbone ne sont précises qu'à l'échelle d'un pays ou d'une région.

Il existe donc un besoin d'une solution simple et efficace permettant de remédier au moins en partie à ces inconvénients.

**[Exposé de l'invention]**

L'un des buts de l'invention est de permettre la prise en compte des intensités carbones au niveau d'un site auquel sont rattachés des équipements informatiques, notamment un site fabriquant tout ou partie de son électricité. Un autre but de l'invention est de permettre le calcul de l'empreinte énergétique de systèmes informatiques nomades (ordinateurs portables, smartphones, etc.). Un autre but de l'invention est de mesurer en temps réel l'empreinte carbone d'une infrastructure informatique plutôt que de l'estimer comme le propose les approches antérieures, ceci afin de pouvoir quantifier l'effet de solution d'économie d'énergie à l'échelle d'une infrastructure informatique. Un autre but de l'invention est de mesurer en temps réel l'empreinte carbone d'une infrastructure informatique distribuée. Un autre but de l'invention est de mesurer l'empreinte carbone d'une infrastructure informatique hétérogène.

A cette fin, l'invention a tout d'abord pour objet un dispositif de détermination en temps réel de l'empreinte carbone d'une infrastructure informatique, ladite infrastructure informatique comprenant un ensemble d'équipements informatiques sur au moins un site, ledit dispositif comprenant :

- une première base de données,
- une deuxième base de données,
- un module de collecte configuré pour collecter des données dites « d'équipement » provenant de l'ensemble d'équipements informatiques et les enregistrer dans la première base de données, lesdites données d'équipement comprenant, pour chaque équipement informatique, la mesure de sa consommation énergétique et sa localisation horodatée,
- un module de réception configuré pour recevoir, pour chaque site, une valeur d'intensité carbone fournie par le fournisseur d'électricité du site, et pour l'enregistrer dans la première base de données,
- un module de consolidation configuré pour associer une valeur d'intensité carbone d'un site, enregistrée dans la première base de données, à chaque équipement informatique en fonction de la localisation horodatée dudit équipement informatique, pour calculer l'empreinte carbone de chaque équipement informatique à partir de la valeur d'intensité carbone associée et de sa consommation énergétique mesurée enregistrées dans la première base de données et pour enregistrer l'empreinte carbone calculée dans la deuxième base de données.

Par les termes «infrastructure informatique », on entend un ensemble d'équipements informatiques répartis sur un ou plusieurs sites et reliés chacun au dispositif par un lien de communication (avec ou sans fil) via un ou plusieurs réseaux de communication.

Par les termes « intensité carbone fournie par le fournisseur d'électricité du site », on entend l'intensité carbone du pays du réseau électrique local du fournisseur électrique du site. L'intensité carbone est un indicateur qui rapporte la quantité de gaz à effet de serre émise par une entité, mesurée par son équivalent en dioxyde de carbone, à la consommation en énergétique électrique de ladite entité (ici du pays ou de la région du réseau électrique).

L'invention propose donc une solution informatique permettant de mesurer en temps réel l'empreinte carbone liée à l'utilisation d'une infrastructure informatique. Elle comprend notamment la mesure horodatée des dépenses énergétiques (kWh) d'un parc informatique hétérogène (téléphones, ordinateurs, serveurs, routeurs, supercalculateurs, ...), la localisation de chaque équipement informatique en temps-réel, la remontée des données horodatées de consommation (kWh), d'alimentation et de localisation de manière centralisée et sécurisée, la récupération des intensités carbone (par exemple en $gCO_2$/kWh) des réseaux électriques pour les pays sur lesquels l'infrastructure est déployée, le calcul des intensités carbone des sites sur lesquels l'infrastructure est déployée dans le cas où ce site produit une partie de son électricité (par exemple par panneaux solaires, générateur diesel, éolien, géothermie, pile à combustible, ...), l'identification, pour chaque source d'émission, de l'intensité carbone à prendre en compte en fonction de sa localisation et de son horodatage, le calcul de l'empreinte carbone (gCO2) de la structure informatique complète et de ces sous-ensembles. L'empreinte carbone est calculée en temps réel. Autrement dit, la solution proposée prend en compte l'électricité consommée et la variabilité de l'intensité carbone en temps réel. Cette variation est prise en compte qu'il s'agisse de l'intensité carbone du réseau électrique du pays ou de celui d'un site (si ce dernier utilise plusieurs sources d'alimentation). Ces variations sont non-négligeables, par exemple, entre la journée et la nuit. En France, une application fonctionnant la nuit aura une empreinte carbone 1,5 à 2 fois plus faible que la journée.

De manière avantageuse, les données d'équipement comprennent en outre le mode d'alimentation de l'équipement informatique. L'indication du mode d'alimentation pour les systèmes possédant une batterie permet de déterminer à un instant donné si l'équipement informatique est alimenté par sa batterie ou bien est alimenté sur secteur. Ainsi, l'empreinte carbone sera calculée avec les données d'équipement datée du dernier moment où l'équipement informatique était alimenté sur secteur afin de rendre la mesure d'empreinte carbone pertinente et donc fiable. Cela permet notamment au dispositif selon l'invention de calculer de l'empreinte énergétique de systèmes informatiques nomades (ordinateurs portables, smartphones, etc.) lors de la charge desdits systèmes même si l'énergie est utilisée a postériori, ce qui améliore la précision de l'empreinte carbone.

Dans une forme de réalisation, au moins un site comprenant un module de production d'électricité et consommant de l'électricité produite par ledit module de production d'électricité, ledit module de production d'électricité comprenant une ou plusieurs sources de production locale d'électricité installées sur ledit au moins un site et étant configuré pour générer des données dites « de production et de localisation » comprenant la mesure de la production d'énergie électrique de l'une ou des sources de production locale d'électricité, par exemple pendant une durée donnée, et sa localisation, le dispositif comprend un module de calcul configuré pour :

- recevoir la valeur d'intensité carbone fournie par le fournisseur d'électricité pour ledit site,
- calculer en temps réel l'intensité carbone consommée par l'ensemble des équipements informatiques dudit site à partir des données de production et de localisation reçues du module de production d'électricité et de la valeur d'intensité carbone fournie par module de réception,
- enregistrer l'intensité carbone calculée dans la première base de données.

De préférence, l'intensité carbone CIsite consommée à un instant donné sur un site à partir du mélange entre l'intensité carbone du réseau et celles des sources d'énergie électrique produite localement est donnée, en énergie (et non en puissance), par l'équation suivante :

[Math 1]

$$CI_{site} = \frac{1}{P_{conso}} \left( \sum_{source} CI_{source} \times P_{source} + (P_{conso} - \sum_{source} P_{source}) \times CI_{réseau} \right)$$

où Pconso est la consommation globale du site à l'instant t, CIsource est l'intensité carbone d'une source, Psource est la puissance de ladite source et CIréseau est l'intensité carbone du réseau électrique.

Selon un aspect de l'invention, le dispositif comprend un module d'agrégation configuré pour agréger les données relatives aux empreintes carbone de la deuxième base de données pour l'infrastructure informatique afin de déterminer son empreinte carbone globale.

Avantageusement, le module d'agrégation est configuré pour agréger les données relatives aux empreintes carbone de la deuxième base de données par site et/ou par type d'équipement informatique.

Avantageusement encore, le module d'agrégation est configuré pour agréger les données relatives aux empreintes carbone de la deuxième base de données pour une sous-partie de l'infrastructure informatique telle que, par exemple, une unité commerciale, un département, une équipe, etc.

Selon un aspect de l'invention, le dispositif comprend un module de visualisation comportant un écran d'affichage, ledit module de visualisation étant configuré pour recevoir les données agrégées fournies par le module d'agrégation et pour afficher les données agrégées reçues.

L'invention concerne également un équipement informatique pour la mesure en temps réel de l'empreinte carbone d'une infrastructure informatique installée sur au moins un site, ledit équipement informatique étant configuré pour déterminer sa consommation énergétique en temps réel et sa localisation horodatée et pour envoyer la consommation énergétique déterminée et la localisation horodatée déterminée à un dispositif tel que présenté précédemment.

De manière avantageuse, notamment pour les équipements informatiques portables ou mobiles (smartphone, ordinateur portable, etc.), l'équipement informatique est configuré pour identifier son mode d'alimentation électrique à un instant donné et pour envoyer le type dudit mode identifié au dispositif.

L'invention concerne également une infrastructure informatique comprenant une pluralité d'équipements informatiques tels que présentés ci-avant répartis sur plusieurs sites.

De préférence, l'infrastructure informatique est hétérogène, c'est-à-dire que les équipements informatiques sont de plusieurs types. Ainsi, l'empreinte carbone est calculée pour une infrastructure informatique hétérogène. Autrement dit, l'empreinte carbone concerne des équipements informatiques divers (téléphones, ordinateurs, serveurs, routeurs, supercalculateurs, ...) fonctionnant par exemple sur des systèmes d'exploitation différents (Windows®, Linux®, Mac OS®, Android®, IOS®).

De préférence, l'infrastructure informatique est distribuée, c'est-à-dire que les équipements informatiques sont situés sur plusieurs sites géographiquement distincts. Ainsi, l'empreinte carbone est calculée sur une infrastructure informatique distribuée. Autrement dit, l'empreinte carbone concerne des équipements informatiques répartis sur plusieurs sites, eux-mêmes par exemple répartis dans plusieurs pays. Ceci impose la prise en compte de la localisation de chaque équipement informatique afin de lui attribuer l'intensité carbone de son fournisseur d'électricité (le pays ou le site dans le cas où le site génère tout ou partie de son électricité).

L'invention concerne également un système de détermination en temps réel de l'empreinte carbone d'une infrastructure informatique, ledit système comprenant :

- une infrastructure informatique comprenant un ensemble d'équipements informatiques sur au moins un site,
- un dispositif tel que présenté ci-avant.

Dans une forme de réalisation, au moins un site comprend un module de production d'électricité comprenant une ou plusieurs sources de production locale d'électricité installées sur ledit au moins un site, ledit module de production d'électricité étant configuré pour :

- produire, et de préférence stocker, de l'électricité,

- générer des données dites « de production et de localisation » comprenant la mesure de la production d'énergie électrique de l'une ou des sources de production locale d'électricité, et la localisation du site,
- envoyer les données de production au dispositif.

L'invention concerne également un procédé de détermination en temps réel de l'empreinte carbone d'une infrastructure informatique, ladite infrastructure informatique comprenant un ensemble d'équipements informatiques sur au moins un site, ledit procédé, mis en œuvre par un dispositif tel que présenté précédemment, comprenant les étapes de :

- collecte des données dites « d'équipement » provenant de l'ensemble d'équipements informatiques, lesdites données d'équipement comprenant, pour chaque équipement informatique, la mesure de sa consommation énergétique et sa localisation horodatée,
- enregistrement des données collectées dans la première base de données,
- réception, pour chaque site, d'une valeur d'intensité carbone fournie par le fournisseur d'électricité du site,
- enregistrement de la valeur reçue dans la première base de données,
- association d'une valeur d'intensité carbone d'un site, enregistrée dans la première base de données, à chaque équipement informatique en fonction de la localisation horodatée dudit équipement informatique,
- calcul de l'empreinte carbone de chaque équipement informatique à partir de la valeur d'intensité carbone associée et de sa consommation énergétique mesurée enregistrées dans la première base de données,
- enregistrement de l'empreinte carbone calculée dans la deuxième base de données.

L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en œuvre un procédé tel que présenté ci-avant mis en œuvre par le dispositif.
L'invention concerne également un procédé mis en œuvre par un équipement informatique tel que présenté précédemment, ledit procédé comprenant les étapes de :

- détermination de la consommation énergétique en temps réel et de la localisation horodatée dudit équipement informatique,
- envoyer la consommation énergétique déterminée et la localisation horodatée déterminée à un dispositif tel que présenté précédemment.

De manière avantageuse, notamment pour les équipements informatiques portables ou mobiles (smartphone, ordinateur portable, etc.), le procédé comprend en outre une étape d'identification du mode d'alimentation électrique de l'équipement informatique et une étape d'envoi dudit mode identifié au dispositif.
L'invention concerne également un produit programme d'ordinateur caractérisé en ce qu'il comporte un ensemble d'instructions de code de programme qui, lorsqu'elles sont exécutées par un ou plusieurs processeurs, configurent le ou les processeurs pour mettre en œuvre un procédé tel que présenté ci-avant mis en œuvre par l'équipement informatique.
L'invention concerne également un procédé mis en œuvre par un système tel que présenté précédemment, ledit procédé comprenant les étapes de :

- détermination de la consommation énergétique en temps réel et de la localisation horodatée par chaque équipement informatique de l'infrastructure informatique,
- envoi par chaque équipement informatique de la consommation énergétique déterminée et la localisation horodatée déterminée au dispositif,
- collecte des données dites « d'équipement » provenant de l'ensemble d'équipements informatiques, lesdites données d'équipement comprenant, pour chaque équipement informatique, la mesure de sa consommation énergétique et sa localisation horodatée,
- enregistrement des données collectées dans la première base de données,
- envoi par le fournisseur d'électricité de chaque site d'une valeur d'intensité carbone,
- réception, pour chaque site, d'une valeur d'intensité carbone fournie par le fournisseur d'électricité du site,
- enregistrement de la valeur reçue dans la première base de données,
- association d'une valeur d'intensité carbone d'un site, enregistrée dans la première base de données, à chaque équipement informatique en fonction de la localisation horodatée dudit équipement informatique,
- calcul de l'empreinte carbone de chaque équipement informatique à partir de la valeur d'intensité carbone associée et de sa consommation énergétique mesurée enregistrées dans la première base de données,
- enregistrement de l'empreinte carbone calculée dans la deuxième base de données.

**[Description des dessins]**

D'autres caractéristiques et avantages de l'invention apparaîtront encore à la lecture de la description qui va suivre. Celle-ci est purement illustrative et doit être lue en regard des dessins annexés sur lesquels :

[Fig 1] La figure 1 illustre schématiquement une forme de réalisation du système selon l'invention.

[Fig 2] La figure 2 illustre schématiquement une forme de réalisation du dispositif selon l'invention.

[Fig 3] La figure 3 illustre schématiquement un mode de réalisation du procédé selon l'invention.

**[Description des modes de réalisation]**

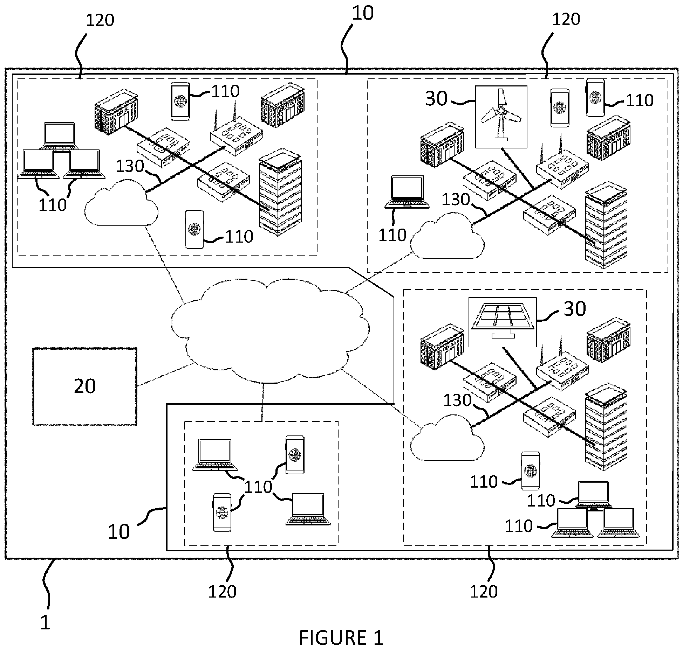

On a représenté à la figure 1 un exemple de système 1 selon l'invention.

Système 1

Le système 1 comprend une infrastructure informatique 10 et un dispositif 20.

Infrastructure informatique 10

L'infrastructure informatique 10 comprend un ensemble d'équipements informatiques 110 répartis sur un ou plusieurs sites 120.

Dans l'exemple de la figure 1, l'infrastructure informatique est hétérogène, c'est-à-dire que les équipements informatiques 110 sont de plusieurs types, et distribuée, c'est-à-dire que les équipements informatiques 110 sont répartis sur plusieurs sites 120.

Equipement informatique 110

Par les termes «équipement informatique» 110, on entend aussi bien un équipement d'utilisateur portable, fixe ou mobile, de type smartphone ou ordinateur portable qu'un équipement fixe de type ordinateur fixe, supercalculateur, serveur, routeur, etc.

L'équipement informatique 110 est configuré pour déterminer sa consommation énergétique en temps réel et sa localisation horodatée.

A cette fin, l'équipement informatique 110 comprend de préférence un micro-service configuré pour collecter les données de consommation énergétique dudit équipement informatique 110, c'est-à-dire mesurer la consommation en énergie électrique dudit équipement informatique 110. De préférence, le micro-service est développé suivant plusieurs versions autour d'une base commune pour s'adapter au système d'exploitation (Linux®, Windows®, Mac OS®, Android®, IOS®) de l'équipement informatique 110 mais également à l'architecture matérielle (registre RAPL, NVidia®, Baseboard Management Controller (BMC)) de l'équipement informatique 110. La mesure de consommation énergétique est faite à la fois lors de la charge de l'équipement informatique 110, afin d'identifier la source d'énergie à prendre en compte, et lors de son utilisation, pour identifier l'impact de chaque paramètre d'utilisation. La mesure de consommation énergétique est faite périodiquement, par exemple avec une période par défaut de 1 seconde.

Le micro-service permet de localiser géographiquement l'équipement informatique 110 suivant plusieurs modes : préférentiellement par GPS® ou via l'utilisation d'autres technologies (Bluetooth®, Wi-fi®, modem cellulaire, ...). Cette localisation est horodatée, la mesure est de préférence faite à chaque démarrage puis périodiquement, par exemple, toutes les heures. Elle permet d'identifier quelle intensité carbone utiliser : celle du réseau électrique du pays où se situe l'équipement informatique 110 ou d'un site 120 générant tout ou partie de son électricité.

L'équipement informatique 110 est configuré pour envoyer la consommation énergétique déterminée et la localisation horodatée déterminée au dispositif 20.

De manière avantageuse, notamment pour les équipements informatiques 110 portables ou mobiles (smartphone, ordinateur portable, etc.), l'équipement informatique 110 est configuré pour identifier son mode d'alimentation électrique et pour envoyer ledit mode identifié au dispositif 20. Notamment, le micro-service permet d'identifier le mode d'alimentation des équipements informatiques disposant d'une batterie (laptop, smartphone). Dans le cas d'une utilisation sur secteur, l'intensité carbone du réseau électrique en temps réel sera utilisée. Dans le cas d'une utilisation batterie, l'intensité carbone au moment de la charge de cette batterie sera utilisée dans le calcul de l'empreinte carbone.

Afin de transférer les données d'équipement vers le dispositif 20, l'équipement informatique 110 comprend de préférence un micro-service de transfert de données. Ce micro-service permet de configurer l'envoi des données de consommation, localisation et mode d'alimentation pour chaque équipement informatique 110 vers le dispositif 20. La communication se fait de préférence via chiffrement et une authentification de chaque équipement informatique 110. Dans le cas où le système est connecté à internet, ces données sont transmises, par exemple, une fois par heure, cette périodicité étant paramétrable. Dans le cas inverse, elles sont stockées en local en attendant une prochaine connexion.

Site 120

Par le terme « site » 120, on entend aussi bien une zone mobile (ou nomade) regroupant un ou plusieurs équipements informatiques 110 mobiles qu'une zone fixe regroupant un ou plusieurs équipements informatiques 110 mobiles et/ou fixes. Un site peut-être par exemple un bâtiment ou un ensemble de bâtiments ou bien un smartphone en itinérance.

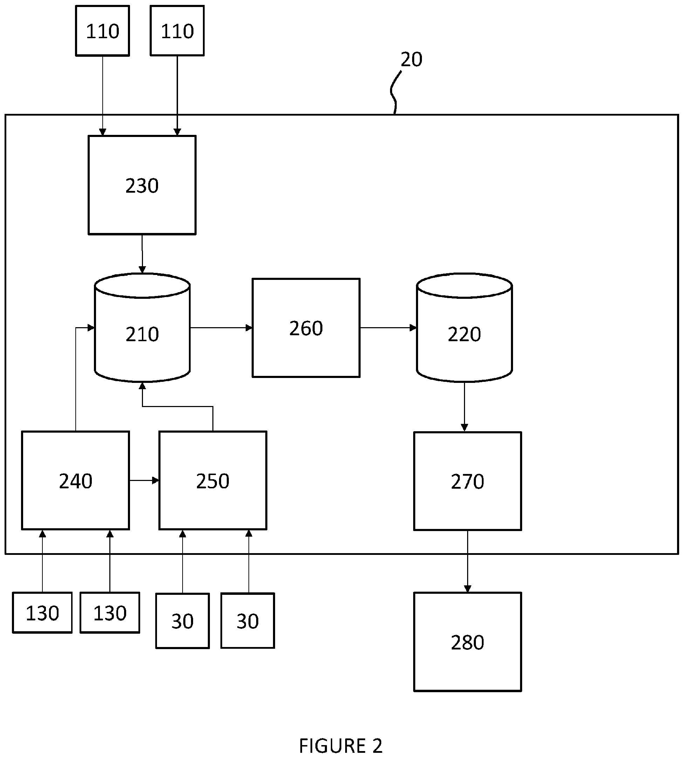

Un ou plusieurs des sites 120 peuvent produire leur propre électricité et consommer un mélange d'électricité produite sur site 120, notamment stockée dans des unités de stockage d'électricité, et d'électricité reçu d'un réseau électrique d'un fournisseur d'électricité 130 (figure 2). Dans ce cas, le ou les sites 120 producteurs d'électricité comprennent chacun avantageusement, toujours en référence à la figure 2, un module de production d'électricité 30.

Le module de production d'électricité 30 est configuré pour produire de l'électricité au moins pour le site 120 sur lequel il est installé. Cette production peut être d'origine solaire ou éolienne ou bien générée par un ou des générateurs, par exemple à moteur thermique, ou bien fournie par des unités de stockage électrique, notamment de type batterie ou pile à combustible. L'énergie produite peut notamment être stockées dans des unités de stockage électrique du module de production d'électricité 30 afin d'être restituée postérieurement.

Le module de production d'électricité 30 est configuré pour générer des données de production et de localisation comprenant la mesure de la production d'électricité par la ou les sources dudit module de production d'électricité 30 et la localisation du site 102.

Le module de production d'électricité 30 est configuré pour envoyer les données de production et de localisation au dispositif 20.

Dispositif 20

On a représenté sur la figure 2 un exemple de dispositif 20.

Le dispositif 20 permet la détermination en temps réel de l'empreinte carbone de l'infrastructure informatique 10.

Le dispositif 20 comprend une première base de données 210, une deuxième base de données 220, un module de collecte 230, un module de réception 240 et un module de consolidation 260.

Dans l'exemple de la figure 2, le dispositif 20 comprend en outre un module de calcul 250 et un module d'agrégation 270 et le système comprend en outre un module de visualisation 280 externe au dispositif 20.

Première base de données 210

La première base de données 210 comprend des données d'équipement reçues du module de collecte 230 et l'intensité carbone de chaque site 120 fournie soit par le module de réception 240, soit par le module de calcul 250.

Les données d'équipement comprennent, pour chaque équipement informatique 110, la mesure de sa consommation énergétique et sa localisation horodatée. De manière avantageuse, les données d'équipement peuvent en outre comprendre le mode d'alimentation de l'équipement informatique 110.

Deuxième base de données 220

La deuxième base de données 220 comprend des données consolidées fournies par le module de consolidation 260.

Module de collecte 230

Le module de collecte 230 est configuré pour collecter des données dites « d'équipement» provenant de l'ensemble d'équipements informatiques 110 et les enregistrer dans la première base de données 210.

De préférence, le module de collecte 230 utilise un micro-service. Avantageusement, le micro-service utilise un protocole de transfert de données de type MQTT (Message Queuing Telemetry Transport) pour communiquer avec les équipements informatiques 110, par exemple un broker MQTT tel que Mosquitto®.

Module de réception 240

Le module de réception 240 est configuré pour recevoir, pour chaque site 120, une valeur d'intensité carbone fournie par le fournisseur d'électricité 130 dudit site 120, et pour l'enregistrer dans la première base de données 210.

Par les termes « intensité carbone fournie par le fournisseur d'électricité 130 dudit site 120 », on entend l'intensité carbone du pays du réseau électrique local du fournisseur électrique 130 du site 120. L'intensité carbone, donnée par exemple en $gCO_2eq/kWh$, est un indicateur qui rapporte la quantité de gaz à effet de serre émise par une entité, mesurée par son équivalent en dioxyde de carbone, à l'énergie électrique consommée par ladite entité, donnée par exemple en kWh.

Des acteurs du secteur énergétique et électrique mettent à disposition des informations concernant l'intensité carbone en temps réel de différents pays à travers le monde via l'utilisation d'API (Application Programming Interface). C'est notamment le cas des sites RTE®, Opendata.energie.fr®, electricitymap®, $CO_2$source®, ENTSOE®, ...

Pour recevoir les valeurs d'intensité carbone, le module de réception 240 comprend de préférence un micro-service se connectant périodiquement, par exemple une fois par heure, aux différents sites des fournisseurs d'électricité 130 afin de récupérer les valeurs d'intensité carbone des réseaux électriques des différents pays.

Module de calcul 250

Certains sites d'une entreprise peuvent utiliser une électricité qui provient à la fois d'un réseau électrique du pays et de leur propre production. Cette production peut être par exemple d'origine solaire, éolienne, via des générateurs diesels ou des unités de stockage (batterie, pile à combustible,...).

Le module de calcul 250 est utilisé pour les sites 120 qui produisent de l'électricité via un module de production d'électricité 30 et consomment à la fois de ladite électricité produite et de l'électricité provenant d'un réseau électrique local auquel le site 120 est relié.

Le module de calcul 250 permet de calculer en temps réel l'intensité carbone consommée par les équipements informatiques 110 situés sur chaque site 120 producteur d'électricité. Cette intensité carbone varie au cours du temps en fonction de l'intensité énergétique du réseau électrique et du mix électrique produit sur le site 120.

Le module de calcul 250 est configuré pour recevoir la valeur d'intensité carbone fournie par le module de réception 240 pour chaque site 120 producteur d'électricité et pour calculer en temps réel l'intensité carbone consommée par l'ensemble des équipements informatiques 110 de chaque site 120 producteur d'électricité à partir des données de production et de localisation reçues du module de production d'électricité 30 dudit site 120 et de la valeur d'intensité carbone fournie par module de réception 240.

L'intensité carbone Clsite consommée à un instant donné sur un site 120 à partir du mix entre l'intensité carbone du réseau électrique du fournisseur d'électricité 130 et celles des sources d'énergies locales du module de production d'électricité 30 est donnée par l'équation suivante (en énergie et non en puissance):

[Math 1]

$$CI_{site} = \frac{1}{P_{conso}} \left( \sum_{source} CI_{source} \times P_{source} + \left( P_{conso} - \sum_{source} P_{source} \right) \times CI_{réseau} \right)$$

Autrement dit, l'intensité carbone Clsite du site 120 est le produit en croix entre l'intensité carbone des sources de puissances locales ramenées à leur capacité de production à l'instant donné, et l'intensité carbone du réseau électrique pour la part de puissance restant à fournir. Les unités de stockage (batteries, piles à combustible, etc.) peuvent être considérées à la fois comme des consommateurs ou des sources en fonctions de leur mode d'alimentation. En tant que consommateurs, elles consommeront avec une intensité carbone Clsite. En tant que producteur, elles produiront avec l'intensité carbone Clsite aux différents instants de leur charge. De même, pour les systèmes nomades, il faut soit utiliser cette valeur à l'instant donné s'ils sont branchés sur secteur (i.e. connectés au réseau électrique), ou à un instant (t-Δ) correspondant à la dernière période de charge.

Le module de calcul 250 est configuré pour enregistrer l'intensité carbone calculée pour chaque site 120 dans la première base de données 210.

Le module de calcul 250 comprend de préférence un micro-service mettant en œuvre ces différentes fonctions.

Module de consolidation 260

Le module de consolidation 260 vise à attribuer la bonne intensité carbone à chaque équipement informatique 110 en fonction de sa localisation et de l'heure.

A cette fin, le module de consolidation 260 est configuré pour associer (ou attribuer) la valeur d'intensité carbone d'un site 120 enregistrée dans la première base de données 210 à chaque équipement informatique 110 en fonction de la localisation horodatée dudit équipement informatique 110.

Le module de consolidation 260 est configuré pour calculer l'empreinte carbone de chaque équipement informatique 110 à partir de la valeur d'intensité carbone associée et de sa consommation énergétique mesurée, enregistrées dans la première base de données 210.

L'intensité carbone horodatée de chaque site 120 est obtenue du module de réception 240 pour les sites 120 qui ne sont pas producteurs d'électricité ou est calculée par le module de calcul 250 pour les sites 120 producteurs d'électricité.

Chaque équipement informatique 110 est attribué à un site 120 en fonction de ces données de localisation et de temps (localisation horodatée).

Si l'équipement informatique 110 se situe trop loin d'un site 120, elle est rattachée au pays dans lequel elle se situe. Un équipement informatique 110 nomade (téléphone, laptop, ...) peut donc être rattaché successivement à plusieurs sites en fonction de l'horodatage.

Pour chaque pas de temps (par exemple par défaut à la seconde), l'empreinte carbone de l'équipement informatique 110 est calculée en multipliant les données de consommations (kWh) par les données d'intensité carbone (gCO2/kWh) du site 120 auquel elle est rattachée à l'instant T.

Pour les équipements informatiques 110 en mode batterie, c'est l'intensité carbone du site 120 au moment de la recharge qui sera utilisé.

Dans ce but notamment, les valeurs d'intensité carbone de l'ensemble des sites 120 et fournisseurs d'électricité 130 peuvent être stockées périodiquement dans la première base de données 210 pendant une durée prédéterminées, par exemple quelques années.

Le module de consolidation 260 est configuré pour enregistrer l'empreinte carbone calculée dans la deuxième base de données 220.

Le module de consolidation 260 comprend de préférence un micro-service mettant en œuvre ces différentes fonctions.

Module d'agrégation 270

Le module d'agrégation 270 est configuré pour agréger les données relatives aux empreintes carbone enregistrées dans la deuxième base de données 220 pour l'infrastructure informatique 10 afin de déterminer son empreinte carbone globale.

De manière à obtenir une vue plus ou moins globale de l'empreinte carbone d'une infrastructure informatique 10, les données relatives à chaque équipement informatique 110 peuvent être agrégées selon plusieurs critères.

Avantageusement, le module d'agrégation 270 est configuré pour agréger les données relatives aux empreintes carbone enregistrées dans la deuxième base de données 220 par site 120 et/ou par type (i.e. famille) d'équipement informatique 110 (smartphones, laptops, supercalculateurs, serveurs...).

Avantageusement encore, le module d'agrégation 270 est configuré pour agréger les données relatives aux empreintes carbone enregistrées dans la deuxième base de données 220 pour une ou plusieurs sous-parties de l'infrastructure informatique 10 telle que, par exemple, une unité commerciale, un département, une équipe, etc.

Le module d'agrégation 270 comprend de préférence un micro-service mettant en œuvre ces différentes fonctions.

Module de visualisation 280

Le module de visualisation 280 comprend un écran d'affichage (non représenté) et est configuré pour recevoir les données agrégées fournies par le module d'agrégation 270 et pour afficher les données agrégées reçues sur ledit écran d'affichage. Le module de visualisation 280 peut par exemple être basé sur un outil de visualisation de type Grafana® ou Kibana®.

Le dispositif 20 comprend un ou plusieurs processeurs aptes à mettre en œuvre un ensemble d'instructions permettant de réaliser les fonctions de ses différents modules.

Exemple de mise en œuvre de l'invention

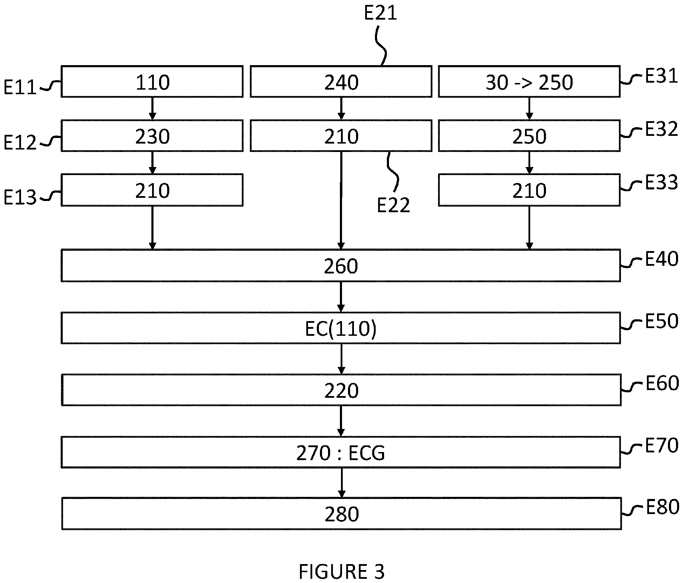

Un exemple de mise en œuvre va maintenant être décrit en référence à la figure 3.

Dans une étape E11, les équipements informatiques 110 déterminent, de préférence périodiquement, par exemple toutes les secondes, leur consommation énergétique et leur localisation horodatée et envoient ces données d'équipement au module de collecte 230.

La consommation énergétique peut être donnée en mW, W, kW, etc. Par exemple, un ordinateur portable peut avoir une consommation de 20 à 40 W, c'est-à-dire de 20 à 40 Wh s'il fonctionne pendant une heure. Un nœud de calcul haute puissance (nœud HPC) peut avoir une consommation de 100 W à 900 W. A titre d'exemple encore, un smartphone peut avoir une consommation de 10 à 500 mW/

La localisation peut être donnée par des coordonnées, par exemple de type GPS ou tout autre paramètre adapté.

Les données d'équipement sont collectées par le module de collecte 230 dans une étape E12 et enregistrées dans la première base de données 210 dans une étape E13.

En parallèle des étapes E11 à E13, le module de réception 240 reçoit de chaque réseau électrique, de préférence périodiquement, par exemple toutes les heures, les valeurs d'intensité carbone de chaque site 120 dans une étape E21 et enregistre dans la première base de données 210 lesdites valeurs d'intensité carbone reçues dans une étape E22.

En parallèle des étapes E11-E13 et E21-E22, le module de calcul 250 reçoit dans une étape E31 les données de production et de localisation des modules de production d'électricité 30 des sites 120 producteurs d'électricité et, pour chaque site 120 producteur d'électricité, la valeur d'intensité carbone fournie par le module de réception 240 (ou obtenue de la première base de données 210) puis calcule en temps réel dans une étape E32 l'intensité carbone consommée par l'ensemble des équipements informatiques 110 de chaque site 120 producteur d'électricité à partir des données de production et de localisation reçues du module de production d'électricité 30 dudit site 120 et de la valeur d'intensité carbone fournie par module de réception 240 et enregistre dans une étape E33 la valeur d'intensité carbone de chaque site 120 dans la première base de données 210.

Ensuite, le module de consolidation 260 associe, dans une étape E40, la valeur d'intensité carbone d'un site 120 enregistrée dans la première base de données 210 (reçue du fournisseur d'électricité 130 associé au site 120 ou calculée par le module de calcul 250) à chaque équipement informatique 110 en fonction de la localisation horodatée dudit équipement informatique 110.

Le module de consolidation 260 calcule ensuite dans une étape E50 l'empreinte carbone EC de chaque équipement informatique 110 à partir de la valeur d'intensité carbone associée et de sa consommation énergétique mesurée enregistrées dans la première base de données 210.

Le module de consolidation 260 enregistre ensuite les empreintes carbone EC calculées dans la deuxième base de données 220 dans une étape E60.

Le module d'agrégation 270 agrège ensuite dans une étape E70 les données relatives aux empreintes carbone EC enregistrées dans la deuxième base de données 220 pour l'infrastructure informatique 10 afin de déterminer son empreinte carbone globale ECG.

En variante ou en complément, le module d'agrégation 270 peut agréger les données relatives aux empreintes carbone enregistrées dans la deuxième base de données 220 par site 120 et/ou par type d'équipement informatique 110.

En variante ou en complément encore, le module d'agrégation 270 peut agréger les données relatives aux empreintes carbone enregistrées dans la deuxième base de données 220 pour une ou plusieurs sous-parties de l'infrastructure informatique 10 telle que, par exemple, une unité commerciale, un département, une équipe, etc.

Enfin, dans une étape E80, le module de visualisation 280 reçoit les données agrégées fournies par le module d'agrégation 270 et affiche les données agrégées reçues sur l'écran d'affichage du module de visualisation 280.

L'invention permet donc une mesure en temps réel de l'empreinte carbone d'une infrastructure informatique 10 de manière fiable et efficace.

## Revendications

1. Dispositif (20) de détermination en temps réel de l'empreinte carbone d'une infrastructure informatique (10), ladite infrastructure informatique (10) comprenant un ensemble d'équipements informatiques (110) sur au moins un site (120), ledit dispositif (20) comprenant :

   - une première base de données (210),
   - une deuxième base de données (220),
   - un module de collecte (230) configuré pour collecter des données dites « d'équipement » provenant de l'ensemble d'équipements informatiques (110) et les enregistrer dans la première base de données (210), lesdites données d'équipement comprenant, pour chaque équipement informatique (110), la mesure de sa consommation énergétique et sa localisation horodatée,
   - un module de réception (240) configuré pour recevoir, pour chaque site, une valeur d'intensité carbone fournie par le fournisseur d'électricité (130) du site (120), et pour l'enregistrer dans la première base de données (110),
   - un module de consolidation (260) configuré pour associer une valeur d'intensité carbone d'un site (120), enregistrée dans la première base de données (210), à chaque équipement informatique (110) en fonction de la localisation horodatée dudit équipement informatique (110), pour calculer l'empreinte carbone de chaque équipement informatique (110) à partir de la valeur d'intensité carbone associée et de sa consommation énergétique mesurée enregistrées dans la première base de données (210) et pour enregistrer l'empreinte carbone calculée dans la deuxième base de données (220).

2. Dispositif (20) selon la revendication 1, dans lequel les données d'équipement comprennent en outre le mode d'alimentation de l'équipement informatique (110).

3. Dispositif (20) selon l'une quelconque des revendications précédentes, dans lequel, au moins un site (120) comprenant un module de production d'électricité (30) et consommant de l'électricité produite par ledit module de production d'électricité (30), ledit module de production d'électricité (30) comprenant une ou plusieurs sources de production locale d'électricité installées sur ledit au moins un site (120) et étant configuré pour générer des données dites « de production et de localisation » comprenant la mesure de la production d'énergie électrique de l'une ou des sources de production locale d'électricité, et sa localisation, le dispositif (20) comprend un module de calcul (250) configuré pour :

- recevoir la valeur d'intensité carbone fournie par le fournisseur d'électricité (130) pour ledit site (120),
- calculer en temps réel l'intensité carbone consommée par l'ensemble des équipements informatiques (110) dudit site à partir des données de production et de localisation reçues du module de production d'électricité (30) et de la valeur d'intensité carbone fournie par module de réception (240),
- enregistrer l'intensité carbone calculée dans la première base de données (210).

4. Dispositif (20) selon l'une quelconque des revendications précédentes, comprenant un module d'agrégation (270) configuré pour agréger les données relatives aux empreintes carbone de la deuxième base de données (220) pour l'infrastructure informatique (10) afin de déterminer son empreinte carbone globale.

5. Dispositif (20) selon la revendication précédente, dans lequel le module d'agrégation (270) est configuré pour agréger les données relatives aux empreintes carbone de la deuxième base de données (220) par site (120) et/ou par type d'équipement informatique (110).

6. Dispositif (20) selon l'une quelconque des revendications 4 ou 5, dans lequel le module d'agrégation (270) est configuré pour agréger les données relatives aux empreintes carbone de la deuxième base de données (220) pour une sous-partie de l'infrastructure informatique (10).

7. Dispositif (20) selon l'une quelconque des revendications précédentes, comprenant un module de visualisation (280) comportant un écran d'affichage, ledit module de visualisation (280) étant configuré pour recevoir les données agrégées fournies par le module d'agrégation (270) et pour afficher les données agrégées reçues.

8. Équipement informatique (110) pour la mesure en temps réel de l'empreinte carbone d'une infrastructure informatique (10) installée sur au moins un site (120), ledit équipement informatique (110) étant configuré pour déterminer sa consommation énergétique en temps réel et sa localisation horodatée et pour envoyer la consommation énergétique déterminée et la localisation horodatée déterminée à un dispositif (20) selon l'une quelconque des revendications précédentes.

9. Équipement informatique (110) selon la revendication précédente, ledit équipement informatique (110) étant configuré pour identifier son mode d'alimentation électrique à un instant donné et pour envoyer le type dudit mode identifié au dispositif (20).

10. Système (1) de détermination en temps réel de l'empreinte carbone d'une infrastructure informatique (10), ledit système (1) comprenant :

- une infrastructure informatique (10) comprenant un ensemble d'équipements informatiques (110) sur au moins un site (120),
- un dispositif (20) selon l'une quelconque des revendications 1 à 7.

11. Système (1) selon la revendication précédente, dans lequel l'infrastructure informatique (10) est hétérogène.

12. Système (1) selon l'une quelconque des revendications 10 ou 11, dans lequel l'infrastructure informatique (10) est distribuée.

**13.** Système (1) selon l'une quelconque des revendications 10 à 12, dans lequel au moins un site (120) comprend un module de production d'électricité (30) comprenant une ou plusieurs sources de production locale d'électricité installées sur ledit au moins un site (120), ledit module de production d'électricité (30) étant configuré pour :

- produire, et de préférence stocker, de l'électricité,
- générer des données dites « de production et de localisation » comprenant la mesure de la production d'énergie électrique de l'une ou des sources de production locale d'électricité, et la localisation du site (120),
- envoyer les données de production au dispositif (20).

**14.** Procédé de détermination en temps réel de l'empreinte carbone d'une infrastructure informatique (10), ladite infrastructure informatique (10) comprenant un ensemble d'équipements informatiques (110) sur au moins un site (120), ledit procédé, mis en œuvre par un dispositif (20) selon l'une quelconque des revendications 1 à 7, comprenant les étapes de :

- collecte (E12) des données dites « d'équipement » provenant de l'ensemble d'équipements informatiques (110), lesdites données d'équipement comprenant, pour chaque équipement informatique (110), la mesure de sa consommation énergétique et sa localisation horodatée,
- enregistrement (E13) des données collectées dans la première base de données (210),
- réception (E21), pour chaque site (120), d'une valeur d'intensité carbone fournie par le fournisseur d'électricité (130) du site (120),
- enregistrement (E22) de la valeur reçue dans la première base de données (210),
- association (E40) d'une valeur d'intensité carbone d'un site (120), enregistrée dans la première base de données (210), à chaque équipement informatique (110) en fonction de la localisation horodatée dudit équipement informatique (110),
- calcul (E50) de l'empreinte carbone de chaque équipement informatique (110) à partir de la valeur d'intensité carbone associée et de sa consommation énergétique mesurée enregistrées dans la première base de données (210),
- enregistrement (E60) de l'empreinte carbone calculée dans la deuxième base de données (220).

**15.** Produit programme d'ordinateur **caractérisé en ce qu'**il comporte un ensemble d'instructions de code de programme qui, lorsqu'elles sont exécutées par un ou plusieurs processeurs, configurent le ou les processeurs pour mettre en œuvre un procédé selon la revendication précédente.

FIGURE 1

FIGURE 2

FIGURE 3

Europäisches
Patentamt

European
Patent Office

Office européen
des brevets

## RAPPORT DE RECHERCHE EUROPEENNE

Numéro de la demande

EP 21 30 6852

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JOHNSON SARAH ET AL: "Synergy: A Smart and Scalable Energy Measurement Platform for Electricity Consumers", 2019 IEEE GLOBAL HUMANITARIAN TECHNOLOGY CONFERENCE (GHTC), IEEE, 17 octobre 2019 (2019-10-17), pages 1-7, XP033737810, DOI: 10.1109/GHTC46095.2019.9033127 [extrait le 2020-03-11] * le document en entier * ----- | 1-15 | INV. G06Q50/06 |
| A | LÖSCH ACHIM ET AL: "Ampehre: An Open Source Measurement Framework for Heterogeneous Compute Nodes", 8 mars 2018 (2018-03-08), ADVANCES IN BIOMETRICS : INTERNATIONAL CONFERENCE, ICB 2007, SEOUL, KOREA, AUGUST 27 - 29, 2007 ; PROCEEDINGS; [LECTURE NOTES IN COMPUTER SCIENCE; LECT.NOTES COMPUTER], SPRINGER, BERLIN, HEIDELBERG, PAGE(S) 73 - 84, XP047471451, ISBN: 978-3-540-74549-5 [extrait le 2018-03-08] * le document en entier * ----- | 1-15 | |
| A | US 2008/059825 A1 (ARAMAKI YASUNORI [JP]) 6 mars 2008 (2008-03-06) * alinéa [0015] * ----- | 2,9 | DOMAINES TECHNIQUES RECHERCHES (IPC) G06Q |

Le présent rapport a été établi pour toutes les revendications

| Lieu de la recherche | Date d'achèvement de la recherche | Examinateur |
|---|---|---|
| La Haye | 13 juin 2022 | Nicoli, Félix |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 21 30 6852

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-06-2022

| Document brevet cité au rapport de recherche | Date de publication | Membre(s) de la famille de brevet(s) | Date de publication |
|---|---|---|---|
| US 2008059825 A1 | 06-03-2008 | JP 2008059387 A | 13-03-2008 |
| | | US 2008059825 A1 | 06-03-2008 |

Pour tout renseignement concernant cette annexe : voir Journal Officiel de l'Office européen des brevets, No.12/82